# EUROPEAN PATENT SPECIFICATION

(11) **EP 3 982 105 B1**
(45) Date of publication and mention of the grant of the patent: **10.04.2024**
(21) Application number: 20821720.8
(22) Date of filing: 26.03.2020
(51) Int. Cl.: B66F 7/20, A47B 9/02

(54) **BALANCE ADJUSTMENT METHOD FOR LIFTING PLATFORM**
GLEICHGEWICHTANPASSUNGSVERFAHREN FÜR HEBEBÜHNE
PROCÉDÉ DE RÉGLAGE D'ÉQUILIBRE DE PLATEFORME DE LEVAGE

(30) Priority: 10.06.2019 CN 201910494911
(43) Date of publication of application: 13.04.2022
(73) Proprietor: Loctek Ergonomic Technology Corp., Ningbo, Zhejiang 315100 (CN)
(72) Inventor: XIANG, Lehong, Ningbo, Zhejiang 315100 (CN); LI, Xiang, Ningbo, Zhejiang 315100 (CN); JIN, Jiadong, Ningbo, Zhejiang 315100 (CN)
(74) Representative: Cabinet Chaillot
(86) International application number: PCT/CN2020/081425
(87) International publication number: WO 2020/248652

(56) References cited:
- CN-A- 108 033 397
- US-A1- 2006 102 432
- US-B1- 6 186 280

## Description

### Technical Field

The present invention relates to the technical field of lifting platforms, in particular to a balance adjustment method for a lifting platform.

### Background

A lifting platform, in the form of a height-adjustable dining table, an office table, a medical bed, a scaffold or the like, can be easily found in houses, offices, hospitals, building sites, etc.

However, uneven placement of the lifting platform may cause its imbalanced platform top. As the lifting platform in the prior art lacks of an automatic inclination adjustment function, once the imbalance issue occurs, a user would suffer inconvenience and discomfort in use, and even if the angle of inclination is too large, articles on the platform or the user standing on the platform may fall off from the lifting platform. The document US 2006/102432 A1 discloses a balance adjustment method for a lifting platform, the lifting platform comprising a controller, an inclination sensor, groups of lifting mechanisms arranged at two opposite sides of the lifting platform, and the inclination sensor and the lifting mechanisms are in signal connection with the controller. The method comprises the steps of detecting with the inclination sensor the inclination of the lifting platform and sending the detected inclination to the controller, comparing the detected inclination with a set inclination threshold by the controller, if the detected inclination exceeds a set threshold then controlling with the controller ascending or descending of the lifting mechanism.

### Summary

The technical problem to be resolved by the present disclosure is to provide a balance adjustment method for a lifting platform whereby the inclination of a lifting platform can be automatically adjusted.

The technical solution of the present disclosure discloses a balance adjustment method for a lifting platform. A lifting platform comprises a controller, an inclination sensor and at least two groups of lifting mechanisms arranged at two opposite sides of the lifting platform, and the inclination sensor and the lifting mechanisms are in signal connection with the controller.

The balance adjustment method for a lifting platform comprises the following steps:
S1, detecting with the controller whether an inclination adjustment signal is received or not, if the inclination adjustment signal is not detected, continuing to detect, and if the inclination adjustment signal is detected, skipping to next step;
S2, detecting with the controller whether the lifting mechanisms are still, if detecting that the lifting mechanisms are in operation, returning to S1 to continue detecting, and if detecting that the lifting mechanisms are still, skipping to next step;
S3, detecting with the inclination sensor the inclination of the lifting platform and sending the detected inclination to the controller, comparing the detected inclination with a set inclination threshold by the controller, if the detected inclination exceeds a set threshold A1, skipping to next step; if the detected inclination is less than or equal to the set threshold A1, skipping to S1 to continue detecting;
S4, controlling with the controller ascending or descending of the lifting mechanism at a first side while continuing to detect with the inclination sensor, and if the detected inclination is less than that detected in S3, skipping to next step; if the detected inclination is more than or equal to that detected in S3, controlling the lifting mechanism at the first side to move in a reverse direction, and then skipping to next step; and
S5, continuing to detect the inclination with the inclination sensor, and when the detected inclination is less than or equal to the set threshold A1, controlling all lifting mechanisms to stop operation.

By adopting the above method, the present invention has the following advantages as compared with the prior art: the inclination sensor detects the inclination of the lifting platform when it is still, and then adjustment is carried out based on the detected inclination, therefore, automatic adjustment is achieved with great convenience and high accuracy. In the process of mounting the lifting platform having two groups of legs, it is easy for a user to insert cables into wrong interfaces of the two groups of legs in a lifting control box, even so balance adjustment of the platform still can be achieved by using the method.

Preferably, in S5, when the detected inclination is less than a deceleration threshold A2, the controller controls the lifting mechanism in operation to decelerate. A2 is more than A1. Setting a deceleration threshold favors of decelerating the lifting mechanism when a balanced position is about to arrive in the adjustment process so as to prevent excessive adjustment, thereby having high adjustment accuracy.

Preferably, after the controller controls the lifting mechanism in operation to decelerate, the inclination sensor continues to detect the inclination, and when the detected inclination is less than a stopping threshold A3, the controller controls the lifting mechanism in deceleration to stop operation. A3 is less than A2. Due to the set stopping threshold, the lifting mechanism, i.e., the motor is closed when the platform top approaches to the horizontal surface. Inertia of the motor helps the platform top become horizontal, so that adjustment accuracy is high.

Preferably, in S4, the controller controls the lifting mechanism at the first side to ascend and the lifting mechanism at a second side to descend, meantime the inclination sensor continues to detect, and if the detected inclination is less than that detected in S3, operation skips to S5; if the detected inclination is more than or equal to that detected in S3, the lifting mechanism at the first side is controlled to descend and the lifting mechanism at the second side is controlled to ascend at the same time, and operation skips to S5. The lifting mechanisms at two sides are simultaneously adjusted, thus adjustment efficiency is higher.

Preferably, if the lifting mechanism at either side arrives at the limit position, the lifting mechanism at this side stops operation, and then only the lifting mechanism at the other side is controlled to operate. During adjustment, once at the top or bottom end, the lifting mechanism cannot ascend or descend any more, in such a case, only the lifting mechanism at the other side can be unilaterally adjusted, therefore, the lifting mechanisms are prevented from being damaged in adjustment. Preferably, in S4, the controller controls the lifting mechanism to operate at the speed of X, and then at the speed of Y when the detected inclination is less than that detected in S3. Y is greater than X. A lower speed is set in judging the inclining side while a higher speed is preferred in adjustment, thereby improving adjustment efficiency.

Preferably, a factory setting levelness A0 is detected before S1.Considering consistency in the aspects of production process and artificial assembly, when the inclination sensor is mounted on a circuit board or the circuit board is placed in a control box in each product, there is an issue of levelness inconsistency in assembling the inclination sensor, therefore debugging is necessary before delivery, that is, a lifting platform is placed horizontally, and then the value of the inclination sensor at this moment is detected and taken as the horizontal reference.

Preferably, in S4, the relationship between the inclination and the adjustment direction also needs to be recorded. To prevent frequent insertion, detection on direction in S4 is necessary, this direction can be recorded after once detection and then adjustment is carried out in accordance with the detected inclination value along the recorded direction, therefore, other detection on direction is avoided, and adjustment becomes easy.

Preferably, the inclination sensor may be an acceleration sensor or angle sensor by which the inclination is conveniently detected, and detection accuracy is higher.

### Embodiments

The present disclosure will be further described in the following embodiments, but is not limited thereto.

Embodiment One: a lifting table comprises a controller, a table board, lifting mechanisms at two sides of the lower part of the table board, an inclination sensor and an input module. The lifting mechanisms, the inclination sensor and the input module are in signal connection with the controller.

The lifting mechanisms are often used in the field of lifting tables, mainly comprise lifting legs and motors, and thus will not be repeated any more.

The inclination sensor is mainly used for detecting the whole inclination, may adopt an acceleration sensor or other sensors and will not be explained in detail as it is a conventional technology.

If the input module is a conventional key module, a user inputs a control signal via keys, or if it is a remote control module, a user emits a signal via a remote control, and the signal is delivered through a wireless communication module to realize control. As a conventional component, any detailed information about the input module will not be provided.

The controller used in the embodiment is very common in the field of lifting tables, and mainly used for processing input information and detection information, comparing with a pre-stored value, and controlling the lifting mechanisms to operate.

According to the invention, a lifting table balance adjustment method according to the independent claim 1 is provided. It mainly comprises the following steps:
S 1, detecting inclination by placing a lifting table on a flat ground before delivery to obtain factory levelness A0 serving as the horizontal reference, delivering the lifting table from the factory, and placing the lifting table at the required position by a user;
S2, inputting an inclination adjustment signal by the user on the input module via keys if it is a key module or via a remote control if it is a remote control module;
S3, judging whether the lifting mechanisms are still or not at present by the controller; if they are not still, indicating that the lifting mechanisms at this moment are in operation and thus not fit for inclination adjustment; and if they are still, indicating that the lifting mechanisms at this moment are idle and fit for inclination adjustment;
S4, detecting with the inclination sensor the inclination of the lifting platform; if the absolute value of the difference of the detected inclination and the factory levelness A0 is more than a set threshold A1, indicating that inclination adjustment is needed; if the absolute value of the difference of the detected inclination and the factory levelness A0 is less than or equal to the set threshold A1, indicating that inclination adjustment is not needed. The set threshold A1 is typically within 0.1-2°, and is 1°in this embodiment.
S5, adjusting the inclination, i.e., controlling with the controller the lifting mechanism at one side to ascend and the lifting mechanism at the other side to descend at the same speed of X, simultaneously detecting with the inclination sensor once again; if the absolute value of the difference of the detected inclination and the factory levelness A0 becomes lower, indicating that the adjusting direction is correct, controlling the lifting mechanisms to continuously operate, and adjusting the speed to Y that is equal to 2X; if the absolute value of the difference of the detected inclination and the factory levelness A0 becomes higher, indicating that the adjustment direction is wrong, then controlling the two lifting mechanisms to operate in respective reverse direction, and adjusting the speed to Y which is equal to 2X; recording the adjustment direction based on the positive or negative difference, if the difference of the detected inclination and the factory levelness A0 is positive, indicating that such adjustment of controlling the lifting mechanism at one side to ascend and the lifting mechanism at the other side to descend is correct, and if the difference of the detected inclination and the factory levelness A0 is negative, indicating that such adjustment of controlling the lifting mechanism at one side to descend and the lifting mechanism at the other side to ascend is correct, or adjustment in reverse direction is correct. When arriving at the limit position in the moving process, the lifting mechanism needs to stop operation, for example, the lifting table is at the top, the lifting mechanisms at two sides cannot move upward any more, in such a case, only the lifting mechanism at either side descends for adjustment.
S6, continuing to detect with the inclination sensor; if the absolute value of the difference of the detected inclination and the factory levelness A0 is less than a deceleration threshold A2, decelerating the two lifting mechanisms. The deceleration threshold A2 in this embodiment is 2°; S7, continuing to detect with the inclination sensor; if the absolute value of the difference of the detected inclination and the factory levelness A0 is less than a stopping threshold A3, stopping the lifting mechanisms, that is, closing motors in the lifting mechanisms, and continuing to adjust by means of inertia of the motors. The stopping threshold A3 in this embodiment is 1.2°, therefore, when the motors completely stop under the effect of inertia, the absolute value of the difference of the detected inclination and the factory levelness A0 has been less than 1°, thereby completing once successful inclination adjustment.

As the lifting mechanisms generally operate at a higher speed, considering the high requirement on accuracy in adjustment, it needs to properly decelerate the lifting mechanisms to ensure adjustment accuracy. If the normal operation speed of the lifting mechanisms is set as Z, Z=2Y. Embodiment Two: a scaffold comprises a controller, a standing platform, a lifting mechanism for adjusting height of the standing platform, an inclination sensor and an input module. The lifting mechanism, the inclination sensor and the input module are in signal connection with the controller.

The lifting mechanism mainly comprising a motor differs from that of Embodiment One in higher motor power and shape of the attached lifting structure, but they have similar operation principle. The inclination sensor is mainly used for detecting the whole inclination, and may adopt an acceleration sensor or other sensors. The inclination sensor as such a conventional technology will not be further explained.

The input module may be a conventional key module, that is, a user inputs a control signal via keys, or it is a remote control module, that is, a user emits a signal via a remote control, and the signal is delivered via a wireless communication module to realize control. With such a conventional technology, the input module will not be further described.

The controller is similar with that in Embodiment One, and they have the similar operation principle. Therefore, detailed description will not be provided.

A scaffold balance adjustment method comprises the specific steps as similar as those in Embodiment One, and merely differs in the requirement on accuracy, i.e., the accuracy in this embodiment is not so high as that in Embodiment One. Therefore, the set threshold is large and is 0.5-5°in the embodiment. Accordingly, the deceleration threshold and the stopping threshold are also large, and the stopping threshold of the scaffold can be lower, even lower than the set threshold, such as 0°. That is to say, after the lifting platform top is detected to be horizontal, the motor is closed.

It should be noted that, the above embodiments are merely illustrative, rather than restrictive, to the technical solution of the present invention. Although the present invention has been explained in detail by referring to the abovementioned embodiments, it should be understood by those skilled in the art that, modifications to the technical solutions in the embodiments or equivalent substitutions of portion of technical features are allowed, as long as they fall within the scope of the appended claims.

## Claims

1. A balance adjustment method for a lifting platform, the lifting platform comprising a controller, an inclination sensor and at least two groups of lifting mechanisms arranged at two opposite sides of the lifting platform, and the inclination sensor and the lifting mechanisms are in signal connection with the controller, wherein, it comprises the following steps:
S1, detecting with the controller whether an inclination adjustment signal is received or not, if the inclination adjustment signal is not detected, continuing to detect, and if the inclination adjustment signal is detected, skipping to next step;
S2, detecting with the controller whether the lifting mechanisms are still, if detecting that the lifting mechanisms are in operation, returning to S1 to continue detecting, and if detecting that the lifting mechanisms are still, skipping to next step;
S3, detecting with the inclination sensor the inclination of the lifting platform and sending the detected inclination to the controller, comparing the detected inclination with a set inclination threshold by the controller, if the detected inclination exceeds a set threshold A1, skipping to next step; if the detected inclination is less than or equal to the set threshold A1, skipping to S1 to continue detecting;
S4, controlling with the controller ascending or descending of the lifting mechanism at a first side while continuing to detect with the inclination sensor, and if the detected inclination is less than that detected in S3, skipping to next step; if the detected inclination is more than or equal to that detected in S3, controlling the lifting mechanism at the first side to move in a reverse direction, and then skipping to next step; and
S5, continuing to detect the inclination with the inclination sensor, and when the detected inclination is less than or equal to the set threshold A1, controlling all lifting mechanisms to stop operation.

2. The balance adjustment method for a lifting platform of claim 1, wherein when the detected inclination is less than a deceleration threshold A2 in S5, the controller controls the lifting mechanism in operation to decelerate, and A2 is greater than A1.

3. The balance adjustment method for a lifting platform of claim 2, wherein after the controller controls the lifting mechanism in operation to decelerate, the inclination sensor continues to detect the inclination, and when the detected inclination is less than a stopping threshold A3, the controller controls the lifting mechanism in deceleration to stop operation; and A3 is less than A2.

4. The balance adjustment method for a lifting platform of claim 1, wherein the controller controls the lifting mechanism at the first side to ascend and the lifting mechanism at a second side to descend in S4, meanwhile the inclination sensor continues to detect, and if the detected inclination is less than that detected in S3, operation skips to S5; if the detected inclination is more than or equal to that detected in S3, the lifting mechanism at the first side is controlled to descend and the lifting mechanism at the second side is controlled to ascend at the same time, and operation skips to S5.

5. The balance adjustment method for a lifting platform of claim 4, wherein if the lifting mechanism at either side arrives at the limit position, the lifting mechanism at this side stops operation, and then only the lifting mechanism at the other side is controlled to operate.

6. The balance adjustment method for a lifting platform of claim 1, wherein in S4, the controller controls the lifting mechanism to operate at the speed of X, and then the controller controls the lifting mechanism at the speed of Y when the detected inclination is less than that detected in S3; Y is greater than X.

7. The balance adjustment method for a lifting platform of claim 1, wherein a factory setting levelness A0 is detected before S1.

8. The balance adjustment method for a lifting platform of claim 1, wherein the relationship between the inclination and the adjustment direction also needs to be recorded in S4.

9. The balance adjustment method for a lifting platform of claim 1, wherein the inclination sensor is an acceleration sensor or angle sensor.

## Patentansprüche

1. - Gleichgewichtseinstellungsverfahren für eine Hebebühne, die Hebebühne umfassend eine Steuerung, einen Neigungssensor und mindestens zwei Gruppen von Hebemechanismen, die auf zwei gegenüberliegenden Seiten der Hebebühne angeordnet sind, und wobei der Neigungssensor und die Hebemechanismen in Signalverbindung mit der Steuerung sind, wobei es die folgenden Schritte umfasst:
S1, Erfassen mit der Steuerung, ob ein Neigungseinstellungssignal empfangen wird, wenn das Neigungseinstellungssignal nicht erfasst wird, Fortsetzen des Erfassens, und wenn das Neigungseinstellungssignal erfasst wird, weiter mit dem nächsten Schritt;
S2, Erfassen mit der Steuerung, ob die Hebemechanismen stillstehen, wenn erfasst wird, dass die Hebemechanismen in Betrieb sind, zurück zu S1, um das Erfassen fortzusetzen, und wenn erfasst wird, dass die Hebemechanismen stillstehen, weiter mit dem nächsten Schritt;
S3, Erfassen der Neigung der Hebebühne mit dem Neigungssensor und Senden der erfassten Neigung an die Steuerung, Vergleichen der erfassten Neigung mit einem eingestellten Neigungsschwellenwert durch die Steuerung, wenn die erfasste Neigung einen eingestellten Schwellenwert A1 überschreitet, weiter mit dem nächsten Schritt; wenn die erfasste Neigung kleiner als oder gleich wie der eingestellte Schwellenwert A1 ist, weiter mit S1, um das Erfassen fortzusetzen;
S4, Steuern des Anhebens oder Absenkens des Hebemechanismus auf einer ersten Seite mit der Steuerung, während das Erfassen mit dem Neigungssensor fortgesetzt wird, und wenn die erfasste Neigung kleiner ist als die in S3 erfasste, weiter mit dem nächsten Schritt; wenn die erfasste Neigung größer als oder gleich wie die in S3 erfasste ist, Steuern des Hebemechanismus auf der ersten Seite, um sich in eine umgekehrte Richtung zu bewegen, und dann weiter mit dem nächsten Schritt; und
S5, Fortsetzen des Erfassens der Neigung mit dem Neigungssensor, und wenn die erfasste Neigung kleiner als oder gleich wie der eingestellte Schwellenwert A1 ist, Steuern aller Hebemechanismen zum Anhalten des Betriebs.

2. - Gleichgewichtseinstellungsverfahren für eine Hebebühne nach Anspruch 1, wobei, wenn die erfasste Neigung kleiner ist als ein Verzögerungsschwellenwert A2 in S5, die Steuerung den Hebemechanismus im Betrieb steuert, um zu verzögern, und A2 größer ist als A1.

3. - Gleichgewichtseinstellungsverfahren für eine Hebebühne nach Anspruch 2, wobei nachdem die Steuerung den Hebemechanismus im Betrieb steuert, um zu verzögern, der Neigungssensor das Erfassen der Neigung fortsetzt, und wenn die erfasste Neigung kleiner als ein Anhalteschwellenwert A3 ist, die Steuerung den Hebemechanismus im Verzögern zum Anhalten des Betriebs steuert; und A3 kleiner als A2 ist.

4. - Gleichgewichtseinstellungsverfahren für eine Hebebühne nach Anspruch 1, wobei die Steuerung den Hebemechanismus in S4 auf der ersten Seite steuert, um anzuheben, und den Hebemechanismus auf einer zweiten Seite, um abzusenken, währenddessen setzt der Neigungssensor das Erfassen fort, und wenn die erfasste Neigung kleiner ist als die in S3 erfasste, geht der Betrieb zu S5 über; wenn die erfasste Neigung größer als oder gleich wie die in S3 erfasste ist, wird der Hebemechanismus auf der ersten Seite gesteuert, um abzusenken und der Hebemechanismus auf der zweiten Seite wird gesteuert, um gleichzeitig anzuheben, und der Betrieb geht zu S5 über.

5. - Gleichgewichtseinstellungsverfahren für eine Hebebühne nach Anspruch 4, wobei, wenn der Hebemechanismus auf einer der zwei Seiten die Grenzposition erreicht, der Hebemechanismus auf dieser Seite den Betrieb einstellt und dann nur der Hebemechanismus auf der anderen Seite gesteuert wird.

6. - Gleichgewichtseinstellungsverfahren für eine Hebebühne nach Anspruch 1, wobei die Steuerung in S4 den Hebemechanismus steuert, um mit der Geschwindigkeit X betrieben zu werden, und dann die Steuerung den Hebemechanismus mit der Geschwindigkeit Y steuert, wenn die erfasste Neigung kleiner ist als die in S3 erfasste; Y ist größer als X.

7. - Gleichgewichtseinstellungsverfahren für eine Hebebühne nach Anspruch 1, wobei eine werkseitig eingestellte Niveaustufe A0 vor S1 erfasst wird.

8. - Gleichgewichtseinstellungsverfahren für eine Hebebühne nach Anspruch 1, wobei in S4 auch das Verhältnis zwischen der Neigung und der Einstellrichtung registriert werden muss.

9. - Gleichgewichtseinstellungsverfahren für eine Hebebühne nach Anspruch 1, wobei der Neigungssensor ein Beschleunigungssensor oder ein Winkelsensor ist.

## Revendications

1. - Procédé de réglage d'équilibre pour une plate-forme de levage, la plate-forme de levage comprenant un dispositif de commande, un capteur d'inclinaison et au moins deux groupes de mécanismes de levage disposés sur deux côtés opposés de la plate-forme de levage, et le capteur d'inclinaison et les mécanismes de levage étant en connexion de signal avec l'unité de commande, dans lequel il comprend les étapes suivantes :
S1, détecter, avec l'unité de commande, si un signal de réglage d'inclinaison est reçu ou non, si le signal de réglage d'inclinaison n'est pas détecté, poursuivre la détection et, si le signal de réglage d'inclinaison est détecté, passer à l'étape suivante ;
S2, détecter, avec l'unité de commande, si les mécanismes de levage sont immobiles ou non, s'il est détecté que les mécanismes de levage sont en fonctionnement, retourner à S1 pour poursuivre la détection et, s'il est détecté que les mécanismes de levage sont immobiles, passer à l'étape suivante ;
S3, détecter, avec le capteur d'inclinaison, l'inclinaison de la plate-forme de levage et envoyer l'inclinaison détectée à l'unité de commande, comparer, par l'unité de commande, l'inclinaison détectée à un seuil d'inclinaison défini, si l'inclinaison détectée dépasse un seuil défini A1, passer à l'étape suivante ; si l'inclinaison détectée est inférieure ou égale au seuil défini A1, passer à l'étape S1 pour poursuivre la détection ;
S4, commander, avec l'unité de commande, une montée ou une descente du mécanisme de levage sur un premier côté tout en poursuivant la détection avec le capteur d'inclinaison, et si l'inclinaison détectée est inférieure à celle détectée à S3, passer à l'étape suivante ; si l'inclinaison détectée est supérieure ou égale à celle détectée à S3, commander le mécanisme de levage sur le premier côté pour qu'il se déplace en sens inverse, puis passer à l'étape suivante ; et
S5, poursuivre la détection de l'inclinaison avec le capteur d'inclinaison et, lorsque l'inclinaison détectée est inférieure ou égale au seuil défini A1, commander l'arrêt du fonctionnement de tous les mécanismes de levage.

2. - Procédé de réglage d'équilibre pour une plate-forme de levage selon la revendication 1, dans lequel, lorsque l'inclinaison détectée est inférieure à un seuil de décélération A2 à S5, l'unité de commande commande une décélération du mécanisme de levage en fonctionnement, et A2 est supérieur à A1.

3. - Procédé de réglage d'équilibre pour une plate-forme de levage selon la revendication 2, dans lequel, après que l'unité de commande a commandé une décélération du mécanisme de levage en fonctionnement, le capteur d'inclinaison poursuit la détection de l'inclinaison et, lorsque l'inclinaison détectée est inférieure à un seuil d'arrêt A3, l'unité de commande commande une décélération du mécanisme de levage pour arrêter le fonctionnement ; et A3 est inférieur à A2.

4. - Procédé de réglage d'équilibre pour une plate-forme de levage selon la revendication 1, dans lequel l'unité de commande commande une montée du mécanisme de levage sur le premier côté et une descente du mécanisme de levage sur le second côté à S4, tandis que le capteur d'inclinaison poursuit la détection et, si l'inclinaison détectée est inférieure à celle détectée à S3, passer à S5 ; si l'inclinaison détectée est supérieure ou égale à celle détectée à S3, le mécanisme de levage sur le premier côté est commandé pour descendre et le mécanisme de levage sur le second côté est commandé pour monter en même temps, et passer à S5.

5. - Procédé de réglage d'équilibre pour une plate-forme de levage selon la revendication 4, dans lequel, si le mécanisme de levage d'un côté ou de l'autre atteint la position limite, le mécanisme de levage sur ce côté cesse de fonctionner, puis seul le mécanisme de levage sur l'autre côté est commandé pour fonctionner.

6. - Procédé de réglage d'équilibre pour une plate-forme de levage selon la revendication 1, dans lequel, à S4, l'unité de commande commande le fonctionnement du mécanisme de levage à la vitesse X, puis l'unité de commande commande le mécanisme de levage à la vitesse Y lorsque l'inclinaison détectée est inférieure à celle détectée à S3 ; Y est supérieur à X.

7. - Procédé de réglage d'équilibre pour une plate-forme de levage selon la revendication 1, dans lequel un niveau de réglage d'usine A0 est détecté avant S1.

8. - Procédé de réglage d'équilibre pour une plate-forme de levage selon la revendication 1, dans lequel la relation entre l'inclinaison et la direction de réglage doit également être enregistrée à S4.

9. - Procédé de réglage d'équilibre pour une plate-forme de levage selon la revendication 1, dans lequel le capteur d'inclinaison est un capteur d'accélération ou un capteur d'angle.
